# FASCICULE DE BREVET EUROPEEN

(11) **EP 1 040 959 B1**
(45) Date de publication et mention de la délivrance du brevet: **13.06.2001**
(21) Numéro de dépôt: 00420058.0
(22) Date de dépôt: 30.03.2000
(51) Int. Cl.: B60N 2/235, B60N 2/68

(54) **Siège à dossier réglable pour voiturette**
Sitz mit verstellbarer Rückenlehne für Kleinwagen
Seat with adjustable backrest for mini-car

(30) Priorité: 02.04.1999 FR 9904373
(43) Date de publication de la demande: 04.10.2000
(73) Titulaire: Grupo Antolin-Ingenieria S.A., 09080 Burgos (ES)
(72) Inventeur: Chabanne, Jean-Pierre, 89710 Champvallon (FR)
(74) Mandataire: Perrier, Jean-Pierre

(56) Documents cités:
- EP-A- 0 121 452
- EP-A- 0 259 201
- DE-A- 3 915 336

## Description

L'invention concerne un siège à dossier réglable pour voiturette.

Le terme voiturette désigne des véhicules à moteur de faible puissance procurant une vitesse de déplacement limitée, ayant les mêmes équipements qu'une automobile, mais réalisés de manière plus économique.

C'est ainsi que les sièges sont conçus de manière plus simple et plus légère pour réduire la masse à vide du véhicule, tout en fournissant un confort satisfaisant et une possibilité de réglage du dossier.

De tels sièges comprennent une armature d'assise, une armature de dossier, formées chacune par un cadre tubulaire, des moyens d'articulation autour d'un axe horizontal transversal, ces moyens étant disposés entre les deux armatures, des moyens à ressorts tendant à rabattre le dossier sur l'avant du siège, des moyens de verrouillage du dossier dans diverses positions angulaires par rapport à l'armature d'assise et des moyens de commande de déblocage des moyens de verrouillage.

Les sièges actuels sont composés de nombreuses pièces qu'il faut fabriquer et assembler, ce qui conduit à un coût de fabrication élevé, mais aussi à un poids encore excessif.

Parfois, l'articulation du dossier sur le siège avec ses moyens de blocage et de commande sont répartis de chaque côté du siège, et compliquent la réalisation des garnitures de sièges qui sont ainsi plus fragiles vers l'articulation et plus coûteuses.

Par ailleurs, l'utilisation de l'articulation et les trépidations du véhicule provoquent des matages et des jeux dans l'articulation et dans ses moyens de blocage, de sorte que le blocage du dossier n'est pas parfait et génère un inconfort pour l'utilisateur.

Le document EP-A-121452 (correspondant au préambule de la revendication 1) vise à remédier à cela en assurant le blocage du dossier au moyen d'un grain denté, monté coulissant sur une ferrure de l'assise et coopérant avec un secteur denté porté par le dossier. Les moyens d'appui et de guidage du grain sont agencés de manière que, sous l'effort de ses moyens de commande, sa denture soit soumise à un mouvement l'amenant contre l'une des faces de la denture du secteur denté de l'assise pour compenser les jeux et usures.

De plus, le palier d'articulation du dossier sur l'axe d'articulation de l'assise est ovalisé vers le haut pour ne venir localement en contact avec cet axe que par deux points, et aussi assurer le maintien du dossier sous l'effort qui lui est communiqué par le grain.

Cette construction repousse dans le temps l'apparition des inconvénients inhérents aux jeux mais ne les supprime pas, ne serait-ce qu'en raison de l'usure de la denture du secteur denté par celle du grain, réalisé dans un matériau plus dur que la tôle soudable constituant le secteur denté.

Le document DE-A-3 915 336 décrit un dispositif d'articulation avec secteur denté, grain denté de blocage pivotant et came de verrouillage disposé l'un au-dessous de l'autre entre la ferrure d'assise et la ferrure de dossier.

Ce dispositif comprend également des moyens de limitation de la course de basculement du dossier composé d'un axe saillant de la ferrure d'assise et d'une lumière en arc de cercle ménagée dans une pièce supplémentaire emboutie et rapportée sur la ferrure d'assise en prenant en sandwich la ferrure du dossier. Cette construction n'apporte aucune solution à la suppression des usures, matages et formation de jeux dans l'articulation, dans les moyens de blocage et dans les moyens de limitation de la course de basculement du siège.

L'invention a pour objet de remédier à ces inconvénients en fournissant un siège à dossier réglable composé d'un nombre réduit de pièces conduisant à un coût de fabrication réduit, et à un plus faible poids tout en simplifiant la réalisation des garnitures de confort et limitant considérablement l'inconfort consécutif aux jeux fonctionnels et d'usure.

L'invention concerne donc un siège comprenant les caractéristiques de la revendication 1, à savoir
- une armature d'assise, une armature de dossier, formées chacune par un cadre tubulaire, cintré en forme et muni, au moins d'un côté, d'une ferrure d'articulation d'assise et d'une ferrure d'articulation de dossier, soudées sur l'armature correspondante,
- des moyens d'articulation de ces deux armatures autour d'un axe horizontal transversal, lesdits moyens coopérant avec les ferrures précitées,
- des moyens de verrouillage du dossier, disposés d'un côté du siège entre deux ferrures et composés, en allant du haut vers le bas, d'un secteur denté solidaire du dossier, d'un verrou pivotant denté et d'une came de blocage du verrou, déblocable par un levier agissant à l'encontre d'un ressort de rappel,
- et des moyens de limitation de la course de basculement du dossier, composés d'un doigt de butée circulant dans une lumière en arc de cercle.

Selon l'invention, le pivot de l'articulation et le doigt de limitation du pivotement sont disposés, respectivement, dans un alésage et dans une lumière en arc de cercle ménagés dans le secteur denté, ledit secteur étant réalisé en acier traité thermiquement et rapporté sur la ferrure du dossier, d'une part, par encastrement de deux bossages, formés par semi-découpage de ce secteur, dans des poinçonnages circulaires ménagés dans la ferrure, et d'autre part, par soudage par point de ces bossages sur la ferrure.

Ce montage permet d'obtenir une excellente liaison entre, d'une part, la ferrure de dossier, normalement réalisée en tôle d'acier emboutissable et soudable, et le secteur denté, réalisé en tôle d'acier pouvant être traitée thermiquement donc moins soudable, tout en améliorant considérablement, par le traitement thermique, la résistance à l'usure du palier pour le pivot et de la lumière pour le doigt de butée. Il en résulte que l'usure est considérablement réduite, tant dans l'articulation que dans les dentures, puisque le verrou est de façon connue, également réalisé en acier traité. Ainsi, la longévité de l'articulation est accrue et les risques d'inconfort repoussés au-delà de la durée du véhicule équipé du siège.

Dans une forme d'exécution, le pivot est muni d'un côté d'une tête épaulée venant en appui sur la ferrure de dossier et de l'autre côté d'un tourillon traversant la ferrure d'assise et rivé sur elle, tandis que le doigt de butée comporte une tête épaulée se logeant dans une lumière de la ferrure de dossier et d'un tourillon traversant la ferrure d'assise et rivé sur elle.

Ainsi, la réalisation de l'articulation ne nécessite, hors montage de ses composants, que de réaliser une opération de soudure et une opération de rivetage pour assurer une liaison définitive et indémontable des deux ferrures. Cette construction présente également l'avantage d'être peu encombrante, et moins lourde que celles actuelles. Sa faible épaisseur simplifie la réalisation des mousses de garnissage qui, ne présentant plus de réserves ou passages, sont plus résistantes dans le temps.

Avantageusement, chacun des cadres des armatures respectivement, d'assise et de dossier, est composé d'un unique tronçon tubulaire, cintré en forme, et de manière que ses extrémités soient perpendiculaires et disposées près des zones d'articulation des deux armatures, lesdites extrémités étant liées par des soudures assurant également leur liaison avec une ferrure, respectivement, d'assise et de dossier, cette deuxième ferrure d'assise étant opposée à celle coopérant avec la ferrure de dossier.

Cet aménagement réduit les temps de fabrication, puisque la soudure des ferrures est simultanée à la soudure des armatures, et conduit aussi à dégager les armatures, en facilitant la mise en place ultérieure des mousses.

D'autres caractéristiques et avantages ressortiront de la description qui suit en référence au dessin schématique annexé représentant une forme d'exécution du siège selon l'invention.
Figure 1 est une vue en perspective du squelette du siège,
Figure 2 est une vue de côté par l'intérieur montrant, en élévation, une forme d'exécution de l'articulation entre l'armature de dossier et l'armature de siège,
Figure 3 est une vue en coupe suivant III-III de figure 2 montrant, à échelle agrandie, les moyens de liaison entre le flasque de dossier et le secteur denté,
Figure 4 est une vue en plan par-dessus du squelette du siège,
Figure 5 est une vue en perspective éclatée de son articulation,
Figure 6 est une vue en coupe brisée suivant VI-VI de figure 2.

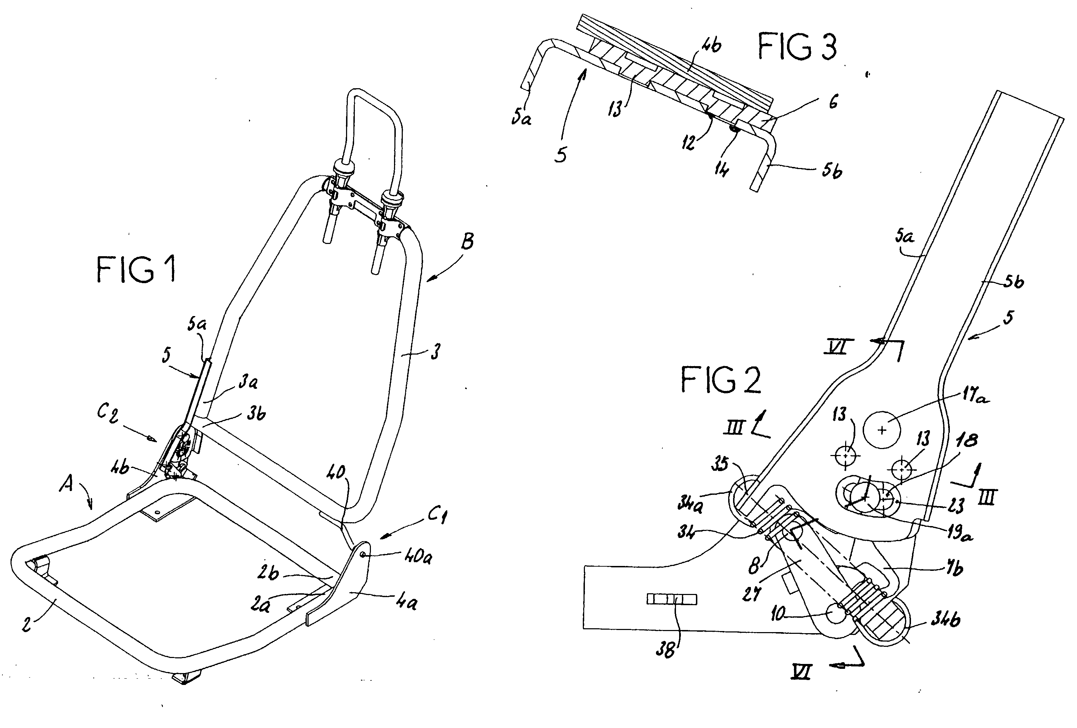

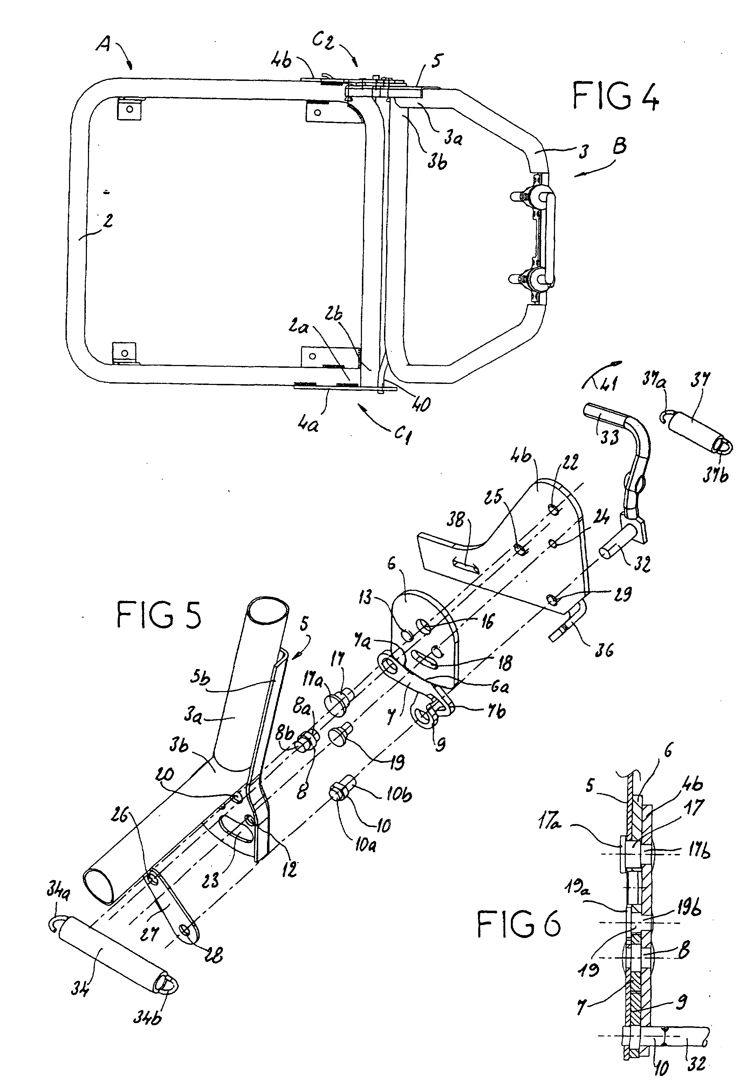

Comme montré aux figures 1 et 4, le siège est composé d'une armature d'assise A, d'une armature de dossier B, et de moyens d'articulation C1, C2.

Chacune des armatures A et B est formée par un cadre tubulaire, respectivement 2 et 3, obtenu par conformation d'un tube métallique cintré en forme. Ce cintrage est réalisé de telle manière que les extrémités 2a, 2b et 3a, 3b du tronçon de tube soient perpendiculaires et disposées près de la zone d'articulation des deux armatures, c'est-à-dire dans l'un des angles inférieurs du cadre du dossier et dans l'un des angles arrière du cadre de l'assise. Les extrémités 2a, 2b, et 3a, 3b sont liées par soudure lors d'une opération au cours de laquelle elles sont également liées à une ferrure, à savoir une ferrure d'assise 4a pour les extrémités 2a, 2b du cadre 2 et une ferrure de dossier 5 pour les extrémités 3a, 3b du cadre 3 du dossier.

La figure 2 montre que la ferrure de dossier 5 est renforcée par deux ailes 5a, 5b lui donnant, en section transversale, la forme d'un U. Ces deux ailes participent à la rigidification de l'armature de dossier, mais aussi de la partie inférieure de la ferrure qui dépasse au-dessous de cette armature.

La ferrure de dossier 5 fait partie des moyens d'articulation C2 en coopérant avec une ferrure d'assise 4b, fixée par soudure sur la partie arrière du bord longitudinal du cadre d'assise 2 qui est opposé au bord portant la ferrure 4a faisant partie des moyens d'articulation C1.

De façon connue, les ferrures 4a, 4b et 5 sont réalisées dans des tôles d'acier emboutissables et soudables.

Comme montré plus en détails à la figure 5, entre la ferrure d'assise 4b et la ferrure de dossier 5, est disposé un secteur denté 6 dont la denture 6a est apte à coopérer avec une denture 7a, d'un verrou 7 articulé autour d'un axe 8. Ce verrou est actionné par une came 9 liée en rotation à un axe 10. Le verrou 7 et sa came 9 sont disposés au-dessous du secteur denté 6.

La figure 6 montre que les différents éléments assurant l'articulation et les fonctions de verrouillage et de déverrouillage du dossier par rapport à l'assise, occupent un encombrement transversal très réduit.

Le secteur denté 6 est réalisé dans un acier acceptant un traitement thermique augmentant la résistance mécanique de sa denture 6a et, comme montré figure 3, est lié à la ferrure 5, d'une part, par engagement dans des poinçonnages cylindriques 12 de cette ferrure 5, de bossages cylindriques 13 formés par semi-découpage dans le secteur 6, et d'autre part, par des points de soudure 14. Bien entendu, le secteur denté 6 est soumis à un traitement thermique après toutes les opérations de poinçonnage et de découpage.

Comme montré à la figure 5, le secteur denté 6 est traversé par un alésage 16 pour le passage du pivot 17 de l'articulation C2 et par une lumière 18 pour le passage d'un doigt de butée 19, limitant de la course de basculement du dossier.

Le pivot 17 traverse également un alésage 20 de la ferrure 5 et présente une tête épaulée 17a venant en appui contre la face interne de cette ferrure 5. Son autre extrémité en forme de tourillon 17b de plus petit diamètre, est emmanchée dans un alésage 22 de la ferrure d'assise 4b avant d'être bouterollée. Il en est de même pour le doigt 19 qui, circulant librement dans la lumière 18 du secteur denté 6, mais avec jeu radial réduit, comporte une tête 19a circulant dans une lumière 23 de la ferrure 5 et un tourillon 19b tige de plus petit diamètre traversant un alésage 24 de la ferrure d'assise 4b, avant d'être bouterollée sur cet axe.

L'axe 8 pour le verrou 7 est bordé de chaque côté par deux parties cylindriques de plus diamètre 8a, 8b traversant, avant bouterollage, respectivement, un alésage 25 de la ferrure 4b et un alésage 26 d'une entretoise 27. L'autre extrémité de l'entretoise est traversée par un alésage 28 dans laquelle est montée libre en rotation l'extrémité 10a de l'axe de came 10 dont l'autre extrémité cylindrique 10b est montée libre en rotation dans un alésage 29 de la ferrure d'assise 4b. La partie 10b, qui dépasse à l'extérieur de la ferrure 4b, est liée en rotation, par exemple, par soudure 30 à la figure 6, à la broche 32 d'un levier de commande 33.

L'articulation C2 qui vient d'être décrite est complétée par deux moyens de rappel, à savoir, deux ressorts hélicoïdaux de traction 34 et 37. L'extrémité antérieure 34a du ressort 34 est accrochée sur un prolongement 35 de l'aile postérieure 5a de la ferrure 5, comme montré figure 2, tandis que son autre extrémité postérieure 34b est accrochée sur une patte coudée 36, solidaire de la ferrure d'assise 4b. Le ressort 34 soumet l'armature de dossier B à un couple de pivotement tendant à la faire pivoter vers l'avant.

L'autre ressort de traction 37 est accroché, par l'une de ses extrémités 37a, à un crevé 38 saillant latéralement de la ferrure d'assise 4b, tandis que l'extrémité 37b est accrochée sur le levier de commande 33.

L'articulation C1, disposée de l'autre côté du siège et visible figure 1, est beaucoup plus simple puisque, composée d'une tige cylindrique 40 soudée sur le cadre de l'armature de dossier par l'une de ses extrémités. Son autre extrémité 40a est coaxiale au pivot 17 de l'articulation C2 et forme un pivot tourillonnant dans un palier de la ferrure d'assise 4a.

La figure 1 met bien en évidence que l'ensemble des moyens, respectivement, de blocage de l'articulation, de déblocage de cette articulation, de commande, de rappel et de limitation de la course, sont disposés d'un même côté et forment une structure ayant un faible encombrement permettant de réaliser des garnitures de confort très simplifiées et peu onéreuses. On notera en particulier que le ressort 34 de redressement du dossier est disposé dans l'intervalle laissé par le coude arrondi du cadre de l'armature d'assise, pour éviter d'avoir à réaliser une réserve dans la garniture.

Lorsque le siège est au repos, la denture 7a du verrou 7 est plaquée dans celle 6a du secteur denté 6 par la came de commande 9 sous l'action de rappel du ressort 37.

Pour procéder au déverrouillage, il suffit de faire pivoter le levier de commande 33 dans le sens de la flèche 41 de figure 5 pour éloigner la came de sa portée de contact sur le verrou et amener son extrémité en contact avec un retour coudé 7b du verrou 7. Ce contact tend à faire pivoter le verrou vers le bas et à éloigner sa denture 7a de celle 6a du secteur denté 6. Il est alors possible de faire pivoter le dossier autour de son axe d'articulation en le tirant vers l'arrière ou en le retenant dans son basculement vers l'avant sous l'action du ressort 34. Le pivotement dans les deux sens est limité par la course de la lumière en arc de cercle 18 du secteur denté 6 autour du doigt de butée 19. Après sélection de la position voulue pour le dossier, le relâchement du levier de commande 33 permet au ressort 37 de ramener la came 9 à sa position initiale en soulevant le verrou 7 et en assurant l'engagement de sa denture 7a dans celle 6a du secteur 6.

Grâce à la meilleure résistance du secteur denté, sa rotation par rapport au pivot entraîne peu d'usure et répartit la formation de jeux au-delà de la durée d'utilisation du véhicule équipé du siège. Il en est de même pour l'usure entre la lumière 18 et le doigt de butée 19 et pour l'usure de la denture 7a du verrou 7 également réalisé en acier traité. La liaison par rivetage ou bouterollage de l'axe 17 et du doigt de butée 19 avec la ferrure d'assise 4b n'est pas sensible aux mouvements du dossier puisque ce sont les têtes épaulées 17a et 19a de ces éléments qui subissent les frottements dus à la rotation. La dimension de ces têtes est suffisante pour éviter la formation de matages pouvant entraîner des jeux axiaux.

## Revendications

1. Siège à dossier réglable pour voiturette comprenant:
- une armature d'assise (A), une armature de dossier (B), formées chacune par un cadre tubulaire (2, 3), cintré en forme et muni, au moins d'un côté, d'une ferrure d'articulation d'assise (4b) et d'une ferrure d'articulation de dossier (5), soudées sur l'armature correspondante,
- des moyens d'articulation (C1, C2) de ces deux armatures (A, B) autour d'un axe horizontal transversal, lesdits moyens d'articulation (C1, C2) coopérant avec les ferrures (4b, 5) précitées,
- et des moyens de verrouillage du dossier (6, 7, 9), disposés d'un côté du siège et composés en allant du haut vers le bas, d'un secteur denté (6) solidaire du dossier (B), d'un verrou denté (7) et d'une came (9) de blocage du verrou (7), déblocable par un levier (33) agissant à l'encontre d'un ressort de rappel (37), lesdits moyens d'articulation (C1, C2) comprenant un pivot d'articulation (17) disposés dans un alésage (16) ménagé dans le secteur denté (6),
**caractérisé en ce que**
des moyens de limitation (18, 19) de la course de basculement du dossier (B) sont composé d'un doigt de butée (19) circulant dans une lumière en arc de cercle (18), en ce que ladite lumière en arc de cercle (18) est ménagée dans le secteur denté (6), ledit secteur denté (6) étant réalisé en acier traité thermiquement et rapporté sur la ferrure du dossier (5), d'une part, par encastrement de deux bossages (13), formés par semi-découpage de ce secteur denté (6), dans des poinçonnages circulaires (12) ménagés dans la ferrure du dossier (5), et d'autre part, par soudage par point (14) de ces bossages (13) sur la ferrure du dossier (5), et en ce que ledit verrou denté (7) est un verrou pivotant.

2. Siège selon la revendication 1, **caractérisé en ce que** le pivot (17) est muni, d'un côté, d'une tête épaulée (17a) venant en appui sur la ferrure de dossier (5) et, de l'autre côté, d'un tourillon (17b) traversant la ferrure d'assise (4b) et bouterollé sur elle, tandis que le doigt de butée (19) comporte une tête épaulée (19a), se logeant dans une lumière (23) de la ferrure de dossier (5), et d'un tourillon (19b) traversant la ferrure d'assise (4b) et bouterollé sur elle.

3. Siège selon la revendication 1, caractérisé en ce que chacun des cadres (2, 3) des armatures respectivement, d'assise (A) et de dossier (B), est composé d'un unique tronçon tubulaire, cintré en forme, et de manière que ses extrémités (2a, 2b 3a, 3b) soient perpendiculaires et disposées près des moyens d'articulation (C1, C2) des deux armatures (A, B), lesdites extrémités étant liées par des soudures assurant également leur liaison avec une ferrure, respectivement, d'assise (4a) et de dossier (5), la ferrure d'assise (4a) étant opposée à celle (4b) coopérant avec la ferrure de dossier (5).

4. Siège selon la revendication 1, **caractérisé en ce que** la ferrure d'assise (4a), opposée à celle (4b) coopérant avec la ferrure de dossier (5), forme palier pour un pivot d'articulation (40a), coaxial au pivot (17) de l'autre ferrure (4b) et constitué par l'extrémité d'une tige cylindrique (40) soudée sur le cadre (3) de l'armature de dossier (B).

5. Siège selon la revendication 1, caractérisé en ce que la ferrure de dossier (5) est renforcée par deux ailes (5a, 5b) lui donnant une section transversale en U et son aile antérieure (5a) se prolonge vers le bas pour former patte d'attache (35) de l'extrémité antérieure (34a) du ressort (34) de rappel du dossier (B), ressort dont l'extrémité postérieure (34b) est accrochée sur une patte coudée (36) saillant de la ferrure d'assise (4b), dans l'espace laissé par l'arrondi d'angle du cadre (2) de l'armature d'assise (A).

## Patentansprüche

1. Sitz mit verstellbarer Rückenlehne für Kleinwagen, umfassend:
- ein Basis-Tragwerk (A), ein Rückenlehnen-Tragwerk (B), die je durch einen in Form gebogenen Rohrrahmen (2, 3) gebildet sind, der zumindest auf einer Seite mit einem Basis-Gelenkbeschlag (4b) und einem Rückenlehnen-Gelenkbeschlag (5), die auf das entsprechende Tragwerk geschweißt sind, versehen ist,
- Gelenkmittel (C1, C2) der zwei Tragwerke (A, B) zum Schwenken um eine horizontale Querachse, wobei die Gelenkmittel (C1, C2) mit den vorgenannten Beschlägen (4b, 5) zusammenwirken,
- und Rückenlehnen-Verriegelungsmittel (6, 7, 9), die auf einer Seite des Sitzes angeordnet sind und aus einem von oben nach unten verlaufenden mit der Rückenlehne (B) verbundenen Zahnsegment (6), einem Zahnbolzen (7) und einem Spermocken (9) des Bolzens (7), der durch einen entgegen einer Rückholfeder (37) wirkenden Hebel (33) entriegelbar ist, bestehen, wobei die Gelenkmittel (C1, C2) einen in einer Bohrung (16) angeordneten Gelenkdrehzapfen (17) umfassen, die im Zahnsegment (6) vorgesehen ist,
dadurch gekennzeichnet, dass Mittel (18, 19) zur Begrenzung des Kippwegs der Rückenlehne (B) aus einem in einer Kreisbogenöffnung (18) umlaufenden Anschlagfinger (19) bestehen, dass die Kreisbogenöffnung (18) im Zahnsegment (6) vorgesehen ist, wobei das Zahnsegment (6) aus wärmebehandeltem Stahl hergestellt ist und auf dem Rückenlehnen-Beschlag (5) einerseits durch Einlassen von zwei durch Herausdrückbearbeitung des Zahnsegments (6) geformten Höckern (13) in kreisförmige im Rückenlehnen-Beschlag (5) vorgesehene Lochungen (12) und andererseits durch Punktschweißen (14) der Höcker (13) auf dem Rückenlehnen-Beschlag (5) angebracht ist und dass der Zahnbolzen (7) ein schwenkbarer Bolzen ist.

2. Sitz nach Anspruch 1, dadurch gekennzeichnet, dass der Drehzapfen (17) auf der einen Seite mit einem sich auf dem Rückenlehnen-Beschlag (5) abstützenden mit Schulter versehenen Kopf (17a) und auf der anderen Seite mit einem den Basis-Beschlag (4b) durchsetzenden und auf diesem durch Verformung festgelegten Lagerzapfen (17b) versehen ist, während der Anschlagfinger (19) einen in einer Öffnung (23) des Rückenlehnen-Beschlags (5) aufgenommenen mit Schulter versehenen Kopf (19a) und einen den Basis-Beschlag (4b) durchsetzenden und auf diesem durch Verformung festgelegten Lagerzapfen (19b) umfasst.

3. Sitz nach Anspruch 1, dadurch gekennzeichnet, dass jeder der Rahmen (2, 3) der Tragwerke von Basis (A) bzw. Rückenlehne (B) aus einem einzigen in Form gebogenen Rohrstück hergestellt ist derart, dass seine Enden (2a, 2b, 3a, 3b) rechtwinklig und nahe der Gelenkmittel (C1, C2) der zwei Tragwerke (A, B) angeordnet sind, wobei die Enden durch Schweißstellen verbunden sind, die auch ihre Verbindung mit einem Basis-Beschlag (4a) bzw. einem Rückenlehnen-Beschlag (5) gewährleisten, wobei der Basis-Beschlag (4a) demjenigen (4b), der mit dem Rückenlehnen-Beschlag (5) zusammenwirkt, gegenüber liegt.

4. Sitz nach Anspruch 1, dadurch gekennzeichnet, dass der Basis-Beschlag (4a), der dem mit dem Rückenlehnen-Beschlag (5) zusammenwirkenden (4b) gegenüber liegt, ein Lager für einen zum Drehzapfen (17) des anderen Beschlags (4b) koaxialen Gelenkdrehzapfen (40a) bildet, der durch das Ende einer auf den Rahmen (3) des Rücklehnen-Tragwerks (B) geschweißten zylindrischen Stange (40) gebildet ist.

5. Sitz nach Anspruch 1, dadurch gekennzeichnet, dass der Rückenlehnen-Beschlag (5) durch zwei ihm einen U-förmigen Querschnitt verleihende Flügel (5a, 5b) verstärkt ist und sein Vorderflügel (5a) sich nach unten verlängert, um eine Befestigungslasche (35) des vorderen Endes (34a) der Rückholfeder (34) der Rückenlehne (B) zu bilden, wobei das hintere Federende (34b) auf eine gebogene Lasche (36) gehakt ist, die von dem Basis-Beschlag (4b) in den durch die Winkeirundung des Rahmens (2) des Basis-Tragwerks (A) gelassenen Raum hervorsteht.

## Claims

1. A seat with adjustable back for a small car, having:
- a seat reinforcement (A) and a back reinforcement (B), each formed by a tubular frame (2, 3) which is curved in shape and equipped at least on one side with a seat articulation bracket (4b) and a back articulation bracket (5) which are welded to the corresponding reinforcement,
- means (C1, C2) for articulating these two reinforcements (A, B) about a transverse horizontal axis, the said articulating means (C1, C2) cooperating with the above-mentioned brackets (4b, 5),
- and means (6, 7, 9) for locking the back which are disposed on one side of the seat and comprise, from top to bottom, a toothed sector (6) integrally formed with the back (B), a toothed interlocking device (7) and a cam (9) for locking the interlocking device (7), which can be unlocked by a lever (33) acting in opposition to a restoring spring (37), the said articulating means (C1, C2) having an articulation pin (17) disposed in a bore (16) made in the toothed sector (6),
characterised in that
means (18, 19) for limiting the tilting travel of the back (B) are formed by a stop finger (19) moving in an arc within an arcuate aperture (18),
in that the said arcuate aperture (18) is made in the toothed sector (6), the said toothed sector (6) being made of tempered steel and attached to the back bracket (5), on the one hand by fitting two bosses (13) formed by partially punching out of this toothed sector (6) into circular punched holes (12) made in the back bracket (5), and on the other hand by spot welding (14) these bosses (13) to the back bracket (5), and
in that the said toothed interlocking device (7) is a pivotal interlocking device.

2. A seat according to Claim 1, characterised in that the pin (17) is equipped on one side with a collar-type head (17a) coming to bear against the back bracket (5), and on the other side with a journal (17b) passing through the seat bracket (4b) and snapped onto the latter, while the stop finger (19) has a collar-type head (19a) engaging in an aperture (23) in the back bracket (5) and a journal (19b) passing through the seat bracket (4b) and snapped onto the latter.

3. A seat according to Claim 1, characterised in that each of the frames (2, 3) of the reinforcements, respectively that of the seat (A) and that of the back (B), comprises a single tubular section which is curved in shape such that its ends (2a, 2b, 3a, 3b) are perpendicular and disposed close to the means (C1, C2) for articulating the two reinforcements (A, B), the said ends being connected by welds also ensuring that they are connected to a bracket, respectively that of the seat (4a) and that of the back (5), the seat bracket (4a) being opposed to that bracket (4b) co-operating with the back bracket (5).

4. A seat according to Claim 1, characterised in that the seat bracket (4a) opposed to that bracket (4b) co-operating with the back bracket (5) forms a bearing for an articulating pin (40a) coaxial with respect to the pin (17) of the other bracket (4b) and formed by the end of a cylindrical rod (40) welded to the frame (3) of the back reinforcement (B).

5. A seat according to Claim 1, characterised in that the back bracket (5) is reinforced by two wings (5a, 5b) which give it a U-shaped cross-section, and its front wing (5a) extends downwards to form a lug (35) for attaching the front end (34a) of the restoring spring (34) of the back (B), this spring (34) having its rear end (34b) hooked onto an e bowed lug (36) which projects from the seat bracket (4b) into the space left by the rounded shape of the corner of the frame (2) of the seat reinforcement (A)
